# EUROPEAN PATENT SPECIFICATION

(11) **EP 0 477 825 B1**
(45) Date of publication and mention of the grant of the patent: **27.12.1996**
(21) Application number: 91116158.6
(22) Date of filing: 23.09.1991
(51) Int. Cl.: A23D 9/00

(54) **Edible fats and oils stabilized with sesame oil as a constituent**
Essbare, mit Sesamöl als Bestandteil stabilisierte Fette und Öle
Graisses et huiles comestibles, stabilisées avec l'huile de sésame comme constituant

(30) Priority: 24.09.1990 US 586660; 12.04.1991 US 684625; 19.09.1991 US 762699
(43) Date of publication of application: 01.04.1992
(73) Proprietor: Silkeberg, Alf, E-3590 Altea (ES)
(72) Inventor: Silkeberg, Alf, E-3590 Altea (ES)
(74) Representative: Dr. Elisabeth Jung Dr. Jürgen Schirdewahn Dipl.-Ing. Claus Gernhardt

(56) References cited:
- FOOD CHEMISTRY, vol. 41, no. 3, 1991, pages 355-360; "Thermal stability of sesame/soybean oil blends"
- JOURNAL OF THE OIL TECHNOLOGISTS' ASSOCIATION OF INDIA, vol. 18, no. 3, July- September 1986, pages 87-89; R.H.H. MILLWALLA et al.: "Thermal stability of blended oils having sesame oil"
- JOURNAL OF THE OIL TECHNOLOGISTS' ASSOCIATION OF INDIA, vol. 17, no. 2, April June 1985, pages 20-22; R.H.H. MILLWALLA et al.: "Keeping quality of biscuits made from blends of hydrogenated oils and liquid oils"
- FOOD SCIENCE & TECHNOLOGY ABSTRACTS, no. 90-07-M0096 (90035408); G.C. YEN et al.: "Oxidative stability of instant noodles fried with sesame oil-vegetable oil blends", & JOURNAL OF THE CHINESE AGRICULTURAL CHEMICAL SOCIETY, vol. 27, no. 2, 1989, pages 196-201
- PATENT ABSTRACTS OF JAPAN, vol. 14, no. 250 (C-723), 29th May 1990; & JP-A-2 069 142 (OCHI HIROTOMO) 08-03-1990
- PATENT ABSTRACTS OF JAPAN, vol. 9, no. 211 (C-300)[1934], 29th August 1985; & JP-A-60 78 542 (HIROMOTO OCHI) 04-05-1985
- JOURNAL OF FOOD SCIENCE AND TECHNOLOGY, INDIA, vol. 24, no. 2, March/April 1987, pages 84-87; T.N. MURTHI et al.: "Storage stability of edible oils and their blends"
- DERWENT FILE SUPPLIER WPIL, AN 90-270720 [36], Derwent Publications Ltd, London, GB; & JP-A-2 189 394 (TSUKISHIMA SHOKUHIN) 25-07-1990
- FOOD SCIENCE & TECHNOLOGY ABSTRACTS, no. 71-09-N0407 (71047420); B.S. RAMACHANDRA et al.: "Process development studies on the wet dehulling and processing of sesame seed to obtain edible protein concentrates", & JOURNAL OF FOOD SCIENCE AND TECHNOLOGY (MYSORE), vol. 7, no. 3, 1970, pages 127-131

## Description

### BACKGROUND OF THE INVENTION

Fats and oils (oils are just liquid fats) are very stable food products, because they contain virtually no water, and, thus, microorganisms cannot thrive or grow in them. However, they do react with water and/or oxygen and under the influence of sunlight, resulting in off-odors and bad flavor, known as rancidity. The rapidity of the onset of rancidity is much greater at high temperatures (as used in preparation of food). The terms "fat" and "oil" are used herein to mean edible fats and oils and are used herein interchangeably to include both except when indicated otherwise expressly or when it is apparent from the context that exclusively one or the other is intended. Each oil has its own stability which varies with two factors:
a) The ratio of saturated fatty acids contained in the oil versus unsaturated fatty acids.
   There are two types of unsaturates:
   monounsaturates and polyunsaturates, the latter being the more vulnerable, the saturates being the least vulnerable.
b) The natural contents in the oil and the potency of such substances contained in the oil known as antioxidants.

It should be added that the duration of the storage of the oil or of the food that has been prepared with the oil and especially the temperature to which the oil is exposed decides the rapidity of the degeneration and that the difference is great: An oil might be destroyed in a few hours if used for pan frying or deep-frying at temperatures of 149-204°C (300-400°F) The same oil might be good for several months at room temperature and for a year or more if stored under refrigeration.

The oils with high contents of saturated fatty acids are more stable than others. Still they are not preferred or are avoided because there is a health hazard involved, namely, the consumption of them raises the cholesterol level in the blood stream which may eventually cause arteriosclerosis and heart failure.

In order to temporarily inhibit the degeneration of oils, i.e., enhance the stability thereof, the following methods are generally applied in commercialization of the oils intended to be heated for food preparation. They are generally used in combination:
1) Hydrogenation.
   The oils are treated with hydrogen under pressure and elevated temperature with the aid of a metal catalyst (for example, nickel). This changes the molecular structure of the oils, viz., so called "trans-fatty acids" are created as a by-product of saturating fatty acids in the oil.
2) The use of synthetic antioxidants, acid synergists and foam inhibitors (the latter also known as "antifoaming agents").

The most commonly used antioxidants are:
Butylated Hydroxy Anisole (BHA)
Butylated Hydroxy Toluene (BHT)
Propyl Gallate
Tertiary Butyl Hydroxy Quinone (TBHQ)

The most commonly used acid synergists, which enhance the effectiveness of antioxidants, are:
Citric acid and its esters
Monoglyceride citrate
Ascorbic acid and its esters
Ascorbyl palmitate

The most commonly used foam inhibitor is:
Methyl silicone

There is, however, especially among the public, a growing concern that neither hydrogenation nor the adding of synthetic chemicals are as safe as they have been thought to be for human consumption. For example, hydrogenation had hitherto been regarded as safe. At the time, many years ago, when the FDA evaluated the safety of hydrogenation, nothing or little was known of the difference in medical significance between high density lipo proteins and low density lipo proteins in the bloodstream. Now these two types are common knowledge and popularly referred to as high density cholesterol ("the good cholesterol") and low density cholesterol ("the bad cholesterol"). Recent research - New England Journal of Medicine, August 16, 1990 - indicates that the trans-fatty acids created through hydrogenation not only raise the serum cholesterol but that the major portion of the cholesterol thus created is of the bad type and that they even reduce the cholesterol of the good type.

It is an object of the present invention to avoid or minimize the use of hydrogenation and the non-natural addition of antioxidants and acid synergists and other synthetic means to inhibit free radical oxidation of fats and oils and the resulting off-odors and off-flavors known as rancidity.

According to the present invention said object is achieved by a mixture comprising (a) at least one edible oil or fat other than sesame oil and (b) about 1% to about 30% by weight of solvent extracted sesame oil.

According to the present invention it has been discovered that a mixture of solvent extracted sesame oil with at least one other edible oil or fat is highly stable, i.e., resistant to the occurrence of rancidity, and, hence, foodstuffs prepared in this oil mixture are more apt to withstand long time storing. For the food service industry the advantage of a higher stability, achieved without synthetic antioxidants or hydrogenation, is, apart from the presumed better nutritional qualities, that the oil can be used longer in a fryer before it has to be discarded, which is an economy. In connection with the present invention, "stability" is resistance to the occurrence of rancidity. In more technical terms, in connection with the present invention "stability" means oxidative stability.

In "Journal of the Oil Technologists' Association of India" 18(3) p. 87-89, 1986 there are described experiments of diluting sesame oil. Sesame oil in these experiments is naturally manufactured by pressing (it is the natural method in India, no manufacturing plant for solvent extraction is available). The sesame oil is preferred for flavour reasons, therefore, expressively not deodorised. The reason for diluting the sesame oil is to use cheaper oils, (ground nut oil, cottonseed oil, safflower oil) and the effect upon the stability is studied. The authors are also comparing the effect of adding sesame oils to other refined oils with adding BHT (Butylated Hydroxy Toluene) and find that similar stabilising effects are obtained. It can be observed that the proportions of sesame oil used in the experiments are 1:1 and 3:1 that is 50% and 25% and further that pure sesame oil is more stable than any of the blends.

In "Journal of the Chinese Agricultural Chemical Society" Vol. 27 no. 2, 1989 p. 196 - 201 there are described experiments with edible oil blends comprising unroasted sesame oil and one other edible oil for example soybean oil, rice bran oil etc. in a ratio of 1 :4. These blends have been used to fry noodles and the rancidity of the fried noodles has been tested with different frying times.

From "Journal of Food Science and Technology", India, Vol. 24, No. 2, March/April 1987 p. 84 - 87 it is known to prepare several edible oil blends in India to the purpose to determine the acceptance by people living in different regions. One of these edible oil blends consists of raw (pressed) sesame oil and refined cottonseed oil in a ratio of 1 : 3.

### DETAILED DESCRIPTION OF PREFERRED EMBODIMENTS

All proportions herein are by weight unless otherwise indicated. According to preferred embodiments of the invention, solvent extracted sesame oil is diluted by mixing it in a proportion of about 1 to about 30% solvent extracted sesame oil, more preferably about 1% to about 20% solvent extracted sesame oil, most preferably about 1 to about 10% solvent extracted sesame oil with at least one other oil or fat, preferably soy bean oil, canola oil, sunflower oil, safflower oil, corn oil, palm oil, rapeseed oil, cottonseed oil, peanut oil, olive oil, grape seed oil, almond oil, tallow or lard. The aforementioned proportions of solvent extracted sesame oil are selected on the basis of providing an oil of substantially increased stability for use for food preparations which may be stored for a long time and as a cooking oil without using a greater than necessary proportion of sesame oil, which is expensive, i.e., on the basis of cost versus benefit analysis.

The mixing of minor proportions of solvent extracted sesame oil, as defined herein above, with other edible oils and fats is not only a nutritious but also a commercially attractive alternative, compared to other commercially used oils and fats for all food preparation applications, especially those intended for long term storage and those of the food service industry, namely frying, typically deep frying potatoes, other vegetables, chicken, meat and fish. The invention might even make the use of hydrogenation and of synthetic antioxidants obsolete, thus contributing to the nutritional qualities of food.

Edible oils and fats are glyceryl esters of fatty acids. Sesame oil has the following fatty acid composition (source: Hermann Pardun, Analyse der Nahrungsfette, Berlin 1976):

| | |
|---|---|
| Saturated fatty acids: | 13.5% |
| palmitic acid | 8.5% |
| stearic acid | 4.5% |
| arachidic acid | 0.5% |
| Mono-unsaturated acids: | 42% |
| oleic acid | 42.0% |
| Polyunsaturated acids: | 44.5% |
| Lineoleic acid | 44.5% |

The ratio polyunsaturated acids to saturated acids (P/S quotient) of sesame oil is therefore as high as 3.3, which most nutritionists would regard as a good oil for reducing serum cholesterol, hence its popularity in health stores.

One would, however, generally consider an oil with this high proportion of polyunsaturates as being very unstable and not useable for the manufacture of food preparations intended for long term storage or for cooking, typically frying such as pan frying or deep frying. The opposite is however the case, i.e., sesame oil is very stable, even when exposed to the high temperatures used for frying, i.e. temperatures which are in range of about 149 to about 204°C (300°F to about 400°F)

The foregoing properties of sesame oil are common knowledge among food scientists as is the reason therefor. Sesame oil has a unique combination of three groups of antioxidants (degradation slowing agents), viz., gamma-tocopherol, sesamol and its precursors and/or reaction products such as sesamolin and sesamolinol, and sterols with an ethylidene side chain, such as delta-5 avenasterol and citrostadienol.

Despite the aforementioned desirable known characteristics of sesame oil it has been regarded as far too expensive to use commercially as an alternative to other cooking oils. Sesame oil, is generally about four times the price of the most commonly used other oils. Therefore, workers in the art have not mixed predetermined proportions of sesame oil with another oil for the purpose of attempting to prepare a cooking oil of increased stability. To the present inventor's knowledge, there is only one instance in which sesame oil has been mixed with other oils in actual commercial practice. Specifically, in Denmark, by legal requirement, all margarine had once contained 0.2%, by weight, sesame oil. This was to help deter the passing off of margarine as butter. Sesame oil is quite unique, and one of its properties is that the slightest concentration of sesame oil is particularly easy to detect by the "Beaudoin reaction." But, workers in the art have not regarded a listing of various oils, including sesame oil, followed by generalized wording such as "and combinations thereof" in a patent having nothing to do with criticality of oil selection for any purpose, let alone increasing stability, (see U.S. Patent 4,188,410) as in any way teaching, suggesting or making the present invention obvious. It should further be added, for the sake of avoiding confusion, that it is well known that mixtures of roasted or not deodorized sesame oil with other oils are used in oriental cooking to season certain dishes. The term "sesame oil" as used in the present application and throughout the art of cooking and industry of commercial food preparation excludes roasted sesame oil and undeodorized sesame oil. Thus, for example, in the *British Pharmacopoeia* (1980), sesame oil is characterized as being "clear, light yellow; almost odourless". Sesame oil, therefore, cannot be confused either with roasted sesame oil since the latter has a distinctive aggressive odor and flavor and is dark brown or with undeodorized sesame oil since the latter is strongly odoriferous.

In the present specification and claims, "stability" of an oil or oil mixture means its tendency not to become rancid, i.e., not to oxidize, viz., oxidative stability. A reference book which discusses making measurements of this property is *Rancidity in Foods*, J.C. Allen and R.J. Hamilton, editors, Applied Science Publishers, London (1983). A test used to make comparative measurements to demonstrate the present invention is the "Automated Swift Test" conducted with the use of apparatus known as a "Rancimat." In the test as practiced in connection with the present invention, the Rancimat test apparatus heats the oil or oil mixture at 100°C as an air stream is blown over the sample, and the numbers of hours are counted until the oil reaches a certain degree of rancidity, corresponding to a peroxide value of 100. The following were the results, in which the proportions as by weight:

The Rancimat value of R.B.D. solvent extracted sesame oil was measured as being 15.9 hours. The Rancimat value of other oils used in the examples were measured as being:

| | |
|---|---|
| Soy bean oil: | 8.9 hours |
| Corn oil: | 10.2 hours |
| Canola oil: | 9.9 hours |
| Cottonseed oil: | 10.1 hours |

### EXAMPLE 1

10% of sesame oil was mixed with each of the other oils and the Rancimat values of the mixtures were measured as being:

| | |
|---|---|
| Soy bean oil/sesame oil: | 11.0 hours |
| Corn oil/sesame oil: | 11.6 hours |
| Canola oil/sesame oil: | 11.1 hours |
| Cottonseed oil/sesame oil: | 11.7 hours |

### EXAMPLE 2

20% of sesame oil was mixed with each of the other oils and the Rancimat values of the mixtures were measured as being:

| | |
|---|---|
| Soy bean oil/sesame oil: | 13.2 hours |
| Corn oil/sesame oil: | 15.1 hours |
| Canola oil/sesame oil: | 11.9 hours |
| Cottonseed oil/sesame oil: | 11.3 hours |

### EXAMPLE 3

30% of sesame oil was mixed with each of the other oils and the Rancimat values of the mixtures were measured as being:

| | |
|---|---|
| Soy bean oil/sesame oil: | 15.1 hours |
| Corn oil/sesame oil: | 16.2 hours |
| Canola oil/sesame oil: | 12.6 hours |
| Cottonseed oil/sesame oil: | 15.9 hours |

If the actual results of the examples are compared with what could have been expected mathematically, the following table results:

| Oil: | Sesame | Soy bean | Corn | Canola | Cottonseed |
|---|---|---|---|---|---|
| Original Rancimat hours: | 15.9 | 8.9 | 10.2 | 9.9 | 10.1 |
| Mixed with 10% sesame: | | 11.0 | 11.6 | 11.1 | 11.7 |
| Expected result: | | 9.6 | 10.7 | 10.2 | 10.7 |
| 20% mix with sesame: | | 13.2 | 15.1 | 11.9 | 15.3 |
| Expected result: | | 10.3 | 11.3 | 11.1 | 11.3 |
| 30% mix with sesame: | | 15.1 | 16.2 | 12.6 | 15.9 |
| Expected result: | | 11.0 | 11.9 | 11.7 | 11.8 |

The "expected result" is mathematically derived, namely the weighted average of the Rancimat values of the respective mixtures. The figures have been achieved by the following operation: the proportion of sesame oil that has been used as the decimal equivalent of the percentage (i.e., as 0.1, 0.2 or 0.3) x the stability of sesame oil (15.9 hours) + the proportion of the other oil as the decimal equivalent of the percentage (i.e., as 0.7, 0.8 or 0.9) x the stability of the respective oils (8.9, 10.2, 9.9 or 10.1 hours).

It can now be noted how significantly the actual results of the examples differ from what would have been expected. Perhaps most striking is that a 30% mixture of sesame oil with corn oil is even more stable than pure sesame oil and that the results are almost as good with cottonseed oil and soy bean oil.

The explanation for these surprising results is not known for sure, but it is known that soy bean oil, for instance, contains other antioxidants, namely tocopherols. It has been tried for experimental purpose to add additional quantities of tocopherols to soy bean oil, with the then surprising result that the stability was reduced. Too abundant antioxidants seem to counteract each other, to be pro-oxidative. It can therefore be hypothesized that undiluted sesame oil contains antioxidants in too great a concentration and, therefore, they get more effective when diluted. This is merely a theory, however, and is not intended to limit the scope of the invention.

Proportions of solvent extracted sesame oil of about 1% to about 10% are particularly preferred due to the high cost of solvent extracted sesame oil or, for that matter, any sesame oil, though optimum results in the case of these proportions require the selecting or breeding of sesame seeds for higher concentrations of antioxidants than found in the usual run of sesame seeds. Moreover, it has been found that of sesame seeds presently readily available, first quality sesame seeds, such as those currently used as a topping for bread, rolls and the like, i.e., U. S. Grade A sesame seeds, yield sesame oil preferred for the practice of the present invention. Sesame oil extracted exclusively from U. S. Grade B sesame seeds, such as sesame seeds rejected by the bakery industry, is unsuitable for the practice of the present invention. The seeds have been rejected on the basis of being sub-standard in size or weight or non-standard in color. It is only now first recognized, in the reduction to practice of the present invention, that U. S. Grade B sesame seeds are not suitable for the practice of the present invention. The seeds that are used up to now to manufacture sesame oil normally contain, but, due to inadequate supply, are not made up exclusively of, bakery industry rejects. While this presently readily available sesame oil is adequate for the practice of the invention, better results are obtained when the sesame oil is extracted from seeds not including bakery industry rejects or in which the proportion of bakery industry rejects is lower than has heretofore been customary. The reasons for the unsuitability of the U. S. Grade B sesame seeds for the practice of the present invention are believed to be as follows. Some of the seeds are unripened and, hence, different in chemical build-up; some of them have been damaged and oxidized; some of them are pro-oxidative and, hence, adversely affect the antioxidative value of the oil. This is shown by the following test.

### TEST COMPARING U. S. GRADES A AND B SESAME SEEDS

Sesame oil was extracted from U. S. Grade A and U. S. Grade B sesame seeds at room temperature by a solvent mixture consisting of, by volume, 3 parts of heptane and 2 parts of isopropanol. Analysis of the oils gave the following results:

| | Peroxide value | Anisidine value | Chlorophyll, ppm |
|---|---|---|---|
| Grade A | 0.42 | 0.43 | 0,26 |
| Grade B | 1.17 | 1.17 | 3,47 |

The conclusion is that levels of primary (peroxide value) and secondary (anisidine value) oxidation products as well as so called "prooxidative pigments," i.e., chlorophylls, were substantially higher in Grade B seeds than in Grade A seeds.

The Automated Swift Test conducted by use of the Rancimat is well known by workers in the art. The Automated Swift Test and Rancimat are referred to specifically at pp. 41-43 of the aforementioned treatise *Rancidity in Foods*. The Automated Swift Test as conducted by use of the Rancimat is sometimes referred to as the "Rancimat Method." Which model Rancimat is used is not crucial. The model used in making the above tests was the "679 Rancimat," marketed by Metrohm, Basel, Switzerland.

Edible fats and oils are commonly extracted from seeds and the like by pressing or solvent extraction. Sesame oil characterized as "cold pressed" and "solvent extracted" are sesame oil obtained respectively by cold pressing and solvent extraction, the latter typically with hexane or a mixture of hexane and isopropanol; this is commonly known in the art and is described, for example, in *Food Oils and Their Uses*, Second Edition, Theodore J. Weiss, AVI Publishing Company, Westport, Connecticut. Cold pressed sesame oil is not found to be effective in the present invention; in a typical instance it was found to have a Rancimat value of only 3.4 hours. The solvent extracted sesame oil in the above Examples 1, 2 and 3 is conventional "R.B.D." grade ("R.B.D." meaning refined, bleached and deodorized) and is the product resulting from subjecting crude solvent extracted sesame oil from the usual commercially available mixtures of U. S. Grade B and U. S. Grade A sesame seeds to alkali refining, bleaching and deodorizing. Sesame oil solvent extracted exclusively from U. S. Grade A sesame seeds would be more preferred for the practice of the present invention because in a typical instance it was found to have a Rancimat value of 30.7 hours.

The corn oil used in the hereinabove described tests was the product of CPC International sold under the trademark "Mazola," which is obtained by the corn wet milling process (cold pressing followed by hexane extraction, U.S. Patent 4,277,411, also see *Edible Oils and Fats, Developments Since 1978*, A. Torrey, Editor, Noyes Data Corporation, Park Ridge, New Jersey (1983), pp. 5, 6). The canola oil used in the hereinabove described tests was the product of Holsum Foods sold under the trademark "Breakthrough," which is obtained by cold pressing followed by hexane extraction. The cottonseed oil used was also a conventional, commercial product.

Since an object of the present invention is to avoid or minimize the use of hydrogenated fats and oils and synthetic antioxidants, the mixtures of the invention preferably will be essentially free of fat or oil which has been subjected to a hydrogenation process and synthetic or separately added antioxidants. Nevertheless, workers in the art may find it convenient to use the present invention in conjunction with oils or fats which have to some extent been hydrogenated or which to some extent have had antioxidants added thereto; these and other variants which would be obvious to workers in the art are to be considered within the spirit and scope of the present invention.

## Claims

1. A mixture comprising (a) at least one edible oil or fat other than sesame oil and (b) about 1% to about 30% by weight of solvent extracted sesame oil.

2. A mixture according to claim 1, in which the proportion of the solvent extracted sesame oil is about 1% to about 20% by weight.

3. A mixture according to claim 2, in which the proportion of the solvent extracted sesame oil is about 1% to about 10% by weight.

4. A mixture according to claim 1, comprising at least one said other oil or fat which has not been subjected to a hydrogenation process.

5. A mixture according to claim 1, in which each said other oil or fat is selected from the group consisting of soy bean oil, canola oil, sunflower oil, safflower oil, corn oil, palm oil, rapeseed oil, cottonseed oil, peanut oil, olive oil, grape seed oil, almond oil, tallow and lard.

6. A mixture according to claim 4, in which each said other oil or fat is selected from the group consisting of soy bean oil, canola oil, sunflower oil, safflower oil, corn oil, palm oil, rapeseed oil, cottonseed oil, peanut oil, olive oil, grape seed oil, almond oil, tallow and lard.

## Patentansprüche

1. Ein Gemisch, aufweisend (a) mindestens ein anderes essbares Öl oder Fett als Sesamöl und (b) etwa 1 Gew% bis etwa 30 Gew% durch Lösungsmittel extrahiertes Sesamöl.

2. Ein Gemisch nach Anspruch 1, in welchem der Anteil des durch Lösungsmittel extrahierten Sesamöls bei etwa 1 Gew% bis etwa 20 Gew% liegt.

3. Ein Gemisch nach Anspruch 2, in welchem der Anteil des durch Lösungsmittel extrahierten Sesamöls bei etwa 1 Gew% bis etwa 10 Gew% liegt.

4. Ein Gemisch nach Anspruch 1, aufweisend mindestens eines der genannten anderen Öle oder Fette, welches keinem Hydrierungsverfahren unterworfen worden ist.

5. Ein Gemisch nach Anspruch 1, in welchem jedes der genannten anderen Öle oder Fette ausgewählt ist aus der Gruppe bestehend aus Sojaöl, Rapsöl, Sonnenblumenöl, Safloröl, Maisöl, Palmöl, Rüböl, Baumwollsamenöl, Erdnußöl, Olivenöl, Traubenkernöl, Mandelöl, Talg und Schweinefett.

6. Ein Gemisch nach Anspruch 4, in welchem jedes der genannten anderen Öle oder Fette ausgewählt ist aus der Gruppe bestehend aus Sojaöl, Rapsöl, Sonnenblumenöl, Safloröl, Maisöl, Palmöl, Rüböl, Baumwollsamenöl, Erdnußöl, Olivenöl, Traubenkernöl, Mandelöl, Talg und Schweinefett.

## Revendications

1. Mélange comprenant :
a) au moins une huile ou graisse comestible autre que l'huile de sésame, et
b) environ 1 % à environ 30 % en poids d'huile de sésame extraite par solvant.

2. Mélange selon la revendication 1, dans lequel la proportion d'huile de sésame extraite par solvant est d'environ 1 % à 20 % en poids.

3. Mélange selon la revendication 2, dans lequel la proportion d'huile de sésame extraite par solvant est d'environ 1 % à environ 10 % en poids.

4. Mélange selon la revendication 1, comprenant au moins une desdites autres huiles ou graisses qui n'a pas été soumise à une hydrogénation.

5. Mélange selon la revendication 1, dans lequel chacune desdites autres huiles ou graisses est choisie dans le groupe formé par l'huile de soja, l'huile de canola, l'huile de tournesol, l'huile de carthame, l'huile de maïs, l'huile de palme, l'huile de colza, l'huile de graine de coton, l'huile d'arachide, l'huile d'olive, l'huile de pépins de raisin, l'huile d'amandes, le suif et le lard.

6. Mélange selon la revendication 4, dans lequel chacune desdites autres huiles ou graisses est choisie dans le groupe formé par l'huile de soja, l'huile de canola, l'huile de tournesol, l'huile de carthame, l'huile de maïs, l'huile de palme, l'huile de colza, l'huile de graine de coton, l'huile d'arachide, l'huile d'olive, l'huile de pépins de raisin, l'huile d'amandes, le suif et le lard.
